# EUROPÄISCHE PATENTSCHRIFT

(11) **EP 2 915 687 B1**
(45) Veröffentlichungstag und Bekanntmachung des Hinweises auf die Patenterteilung: **09.08.2017**
(21) Anmeldenummer: 14172207.4
(22) Anmeldetag: 12.06.2014
(51) Int. Cl.: B60K 15/063, B60K 15/07, B60K 15/03

(54) **Kraftfahrzeug mit Drucktank und Tragelement**
Motor vehicle with pressurised tank and supporting element
Véhicule automobile doté de réservoir de pression et élément de support

(30) Priorität: 07.03.2014 EP 14158418
(43) Veröffentlichungstag der Anmeldung: 09.09.2015
(73) Patentinhaber: MAGNA STEYR Engineering AG & Co KG, 8041 Graz (AT)
(72) Erfinder: Krieger, Horst, 8453 St. Johann i.S. (AT); Mogg, Josef, 8230 Hartberg (AT); Reicher, Horst, 8181 Mitterdorf an der Raab (AT)
(74) Vertreter: Zangger, Bernd

(56) Entgegenhaltungen:
- WO-A1-00/24608
- CN-A- 101 734 149
- CN-U- 201 777 124
- DE-A1-102005 037 636
- GB-A- 2 415 479
- JP-A- 2006 192 947
- KR-A- 20120 066 093
- US-A- 5 992 885
- US-A1- 2006 061 081
- US-A1- 2007 045 328

## Beschreibung

### Gebiet der Erfindung

Die vorliegende Erfindung betrifft ein Kraftfahrzeug aufweisend einen Drucktank und ein Tragelement, wobei das Tragelement den Drucktank trägt.

### Stand der Technik

Kraftfahrzeuge in welche Drucktanks eingebaut sind, sind inzwischen hinlänglich bekannt. Insbesondere verfügen mit Erdgas betriebene Fahrzeuge über Drucktanks in Form von CNG (compressed natural gas) Flaschen. Zur Befestigung solcher Drucktanks ist es bekannt einen Drucktank mittels Spannband an einer Blechschale zu fixieren. Eine derartige Anordnung kann beispielsweise in der Nähe eines Unterbodenschutzes eines Fahrzeuges angebracht sein.

So offenbart zum Beispiel die DE 10 2005 037 636 A1 eine modulare Kraftstoffspeicheranordnung mit einem Gasspeichertank und einem Rahmen, der dazu dient, den Speichertank abzustützen. Der Rahmen ist mit zumindest einem Scharnier mit dem Fahrzeug schwenkbar verbunden. Am Rahmen ist eine Abschirmung angebracht. Zwischen Abschirmung und Rahmen ist ein Schaumelement eingebracht.

Die CN 201 777 124 U, in der die Merkmale des Oberbegriffs von Anspruch 1 enthalten sind, offenbart eine Schutzabdeckung für eine Wasserstoffflasche, wobei die Abdeckung etwa eine Hälfte der Wasserstoffflasche abdeckt.

### Zusammenfassung der Erfindung

Es ist eine Aufgabe der Erfindung, ein Kraftfahrzeug aufweisend einen Drucktank und ein Tragelement anzugeben, wobei der Drucktank und dessen Tragelement nur geringen Bauraum benötigen und das Kraftfahrzeug geringes Gewicht und hohe Steifigkeit aufweist und dennoch einfach und kostengünstig gebaut werden kann.

Die Lösung der Aufgabe erfolgt durch ein Kraftfahrzeug aufweisend einen Drucktank und ein Tragelement mit den weiteren Merkmalen gemäß Anspruch 1.

Erfindungsgemäß ist das Tragelement für den Drucktank als Halbschale ausgebildet die den Drucktank an dessen Unterseite trägt, wobei das Tragelement der Kontur des Drucktanks folgt, das heißt, dass die Form des Tragelements der Form des Drucktanks abschnittsweise entspricht, insbesondere für einen zylindrischen Drucktank das Tragelement über einen Teil der Länge des Drucktanks dem Radius des Drucktanks folgt. Hierdurch kann das Tragelement besonders eng am Drucktank anliegen und benötigt nur wenig Bauraum. Dazu erfüllt die Halbschale einen Doppelnutzen, da zusätzlich zur Tragefunktion der Halbschale diese auch zur Versteifung der Karosserie des Kraftfahrzeugs genutzt wird. Hierzu ist das Tragelement so stabil ausgeführt und so fest mit der Karosserie verbunden, dass durch das Tragelement eine Strukturversteifung, insbesondere eine torsionssteifere Karosserie erreicht wird. Durch diese Maßnahme kann gegebenenfalls ein eigenes Karosseriebauteil eingespart werden oder andere Karosserieteile weniger stark dimensioniert werden, so dass eine zusätzliche Einsparung von Bauraum, Gewicht und Kosten erzielt wird.

Erfindungsgemäß ist zwischen dem Tragelement und dem Drucktank eine elastische Lage angeordnet, wobei die elastische Lage durch ein über den gesamten Umfang des Drucktanks verlaufendes Band gebildet wird. Die elastische Lage kann den Drucktank in Position halten.

Weiterbildungen der Erfindung sind in den abhängigen Ansprüchen, der Beschreibung sowie den beigefügten Zeichnungen angegeben.

Vorzugsweise ist der Drucktank zylindrisch ausgebildet.

Der Drucktank kann auch durch mehrere einzelne, beispielsweise zylindrische Tanks gebildet werden, die von einem gemeinsamen Tragelement getragen werden. Das Tragelement kann dann der Kontur des gesamten Drucktanks folgen, so dass die Konturanpassung sich großteils oder ausschließlich auf die äußeren Tanks bezieht, die die Enden des Drucktanks bilden.

Das Tragelement folgt der Kontur des Drucktanks bevorzugt im Wesentlichen über die ganze axiale Länge des Drucktanks, insbesondere wird der Drucktank hierdurch über seine ganze Länge an dessen Unterseite von der Halbschale überdeckt. Radial umgibt die Halbschale den Drucktank nicht vollumfänglich sondern folgt dessen Kontur in einem unteren Bereich des Drucktanks.

Das Tragelement kann als Blech ausgebildet sein, insbesondere als Stahlblech.

Am Tragelement können bevorzugt Sicken ausgebildet sein, um das Bauteil steifer zu gestalten. In Hohlräumen zwischen den Sicken kann sich auch Wasser bzw. Kondensat sammeln und über bevorzugt ausgebildete Löcher an tiefsten Punkten der Halbschale abfließen.

Bevorzugt bildet das Tragelement einen Abschnitt des Unterfahrschutzes des Kraftfahrzeugs. Somit übernimmt das Tragelement zusätzlich die Funktion eines Unterfahrschutzes bzw. Unterbodens des Fahrzeuges. Das Tragelement kann auch als Wärmeabschirmblech, CW-Verkleidung und/oder als Schubfeld eingesetzt werden, so dass entsprechende sonst erforderliche Bauteile entfallen können.

In einer bevorzugten Ausführungsform weist das Kraftfahrzeug auch eine obere Halbschale auf, so dass die obere Halbschale die Oberseite des Drucktanks zumindest teilweise umgibt, wobei die obere Halbschale der Kontur des Drucktanks folgt. Auch die obere Halbschale ist besonders bevorzugt an der Karosserie des Kraftfahrzeugs befestigt. Hierdurch kann der Drucktank besonders stabil gehalten werden und eine zusätzliche Versteifung der Karosserie erreicht werden.

Um radiale und axiale Längenänderungen des Drucktanks gut aufnehmen zu können weist die elastische Lage besonders bevorzugt radial verteilte axial verlaufende Erhebungen auf oder Noppen.

Die elastische Lage kann durch ein über den gesamten Umfang des Drucktanks verlaufendes elastisches Band, insbesondere Gummiband, gebildet werden. Über die Länge des Drucktanks können mehrere derartige umfänglich verlaufende Bänder angeordnet sein.

Bevorzugt ist das Tragelement an einem linken und/oder rechten Längsträger befestigt, insbesondere verschraubt.

Der Drucktank ist bevorzugt quer zur Fahrtrichtung angeordnet, insbesondere im Heck bzw. Hinterwagen des Kraftfahrzeuges.

### Kurzbeschreibung der Zeichnungen

Die Erfindung wird im Folgenden beispielhaft unter Bezugnahme auf die Zeichnungen beschrieben.
- Fig. 1: ist eine teilweise Schnittansicht eines erfindungsgemäßen Kraftfahrzeugs, umfassend einen Drucktank und ein Tragelement, geschnitten normal zur Achsrichtung des Drucktanks.
- Fig. 2: ist eine Darstellung, welche die Anordnung gemäß Fig. 1 geschnitten parallel zur Achsrichtung des Drucktanks zeigt.
- Fig. 3: ist eine dreidimensionale Ansicht eines erfindungsgemäßen Kraftfahrzeugs, umfassend einen Drucktank und ein Tragelement.
- Fig. 4: ist eine dreidimensionale Ansicht der Anordnung gemäß Fig. 3, jedoch ohne Tragelement aber mit Teilen der Karosserie.
- Fig. 5: ist eine dreidimensionale Ansicht der Anordnung gemäß Fig. 4, jedoch mit Tragelement und mit einer oberen Halbschale.
- Fig. 6: ist eine dreidimensionale Ansicht des Tragelements ohne Drucktank.
- Fig. 7: ist eine dreidimensionale Ansicht der Anordnung gemäß Fig. 6, jedoch mit Heckboden.
- Fig. 8: ist eine ausschnittsweise dreidimensionale Ansicht eines Gummibandes auf der vom Drucktank abgewandten Seite.
- Fig. 9: ist eine ausschnittsweise dreidimensionale Ansicht eines Gummibandes auf der dem Drucktank zugewandten Seite.
- Fig. 10: ist eine ausschnittsweise dreidimensionale Ansicht eines Gummibandes von der Seite.

### Detaillierte Beschreibung der Erfindung

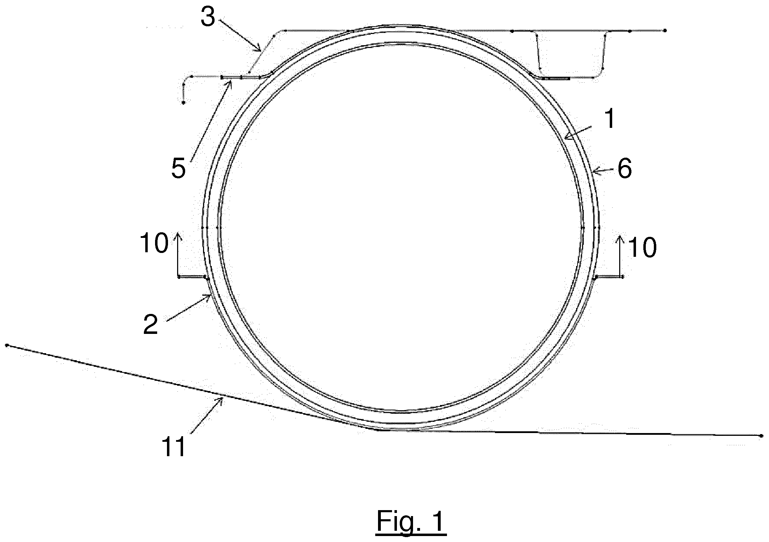

In Fig. 1 ist eine Schnittansicht eines erfindungsgemäß angeordneten Drucktanks 1, geschnitten normal zur Achsrichtung des Drucktanks 1, dargestellt. Der Drucktank 1 wird in einem Tragelement 2 getragen, das eine Halbschale an der Unterseite des Drucktanks 1 bildet, so dass das Tragelement 2 die Unterseite des Drucktanks 1 umgibt. Das Tragelement 2 ist mittels einer Anbindung zur Karosserie 10 mit einer Karosserie 3 fest verbunden, so dass das Tragelement 2 zur Erhöhung der Steifigkeit der Karosserie 3 beitragen kann.

Das Tragelement 2 bildet einen Abschnitt des Unterfahrschutzes des Kraftfahrzeugs und reicht daher bis zu einer Bodenfreiheitslinie 11.

Eine obere Halbschale 5 umgibt die Oberseite des Drucktanks 1 teilweise, wobei auch die obere Halbschale 5 in der dargestellten Ebene normal zur Achsrichtung der Kontur des Drucktanks 1 folgt.

Auch die obere Halbschale 5 ist an der Karosserie 3 des Kraftfahrzeugs befestigt.

Zwischen dem Tragelement 2 und dem Drucktank 1 ist radial umlaufend ein Gummiband als elastische Lage 6 angeordnet.

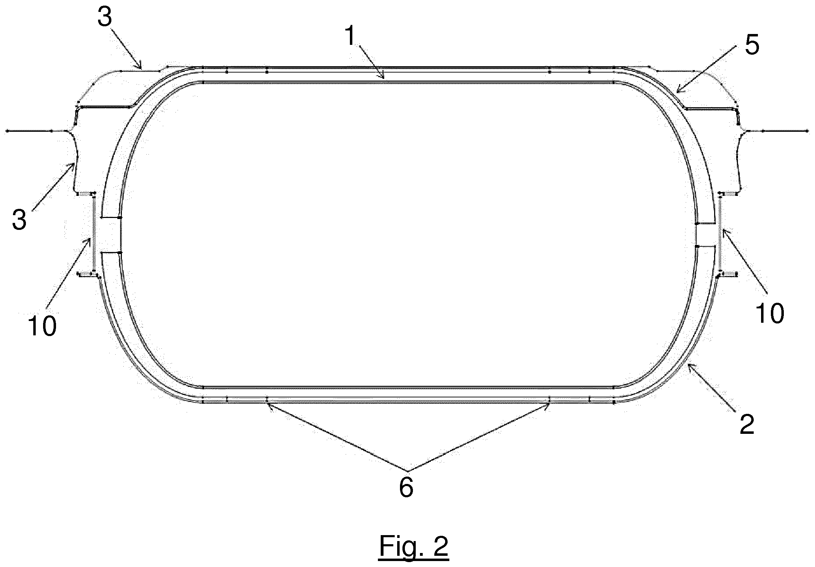

Fig. 2 ist eine Darstellung, welche die Anordnung gemäß Fig. 1 parallel zur Achsrichtung des Drucktanks zeigt. Wie in dieser Darstellung ersichtlich, sind mehrere Gummibänder bzw. elastische Lagen 6 entlang der Längsachse des Drucktanks 1 verteilt angeordnet.

In dieser Ausführungsform folgt das Tragelement 2 der Kontur des Drucktanks 1 sowohl radial als auch in Achsrichtung des Drucktanks.

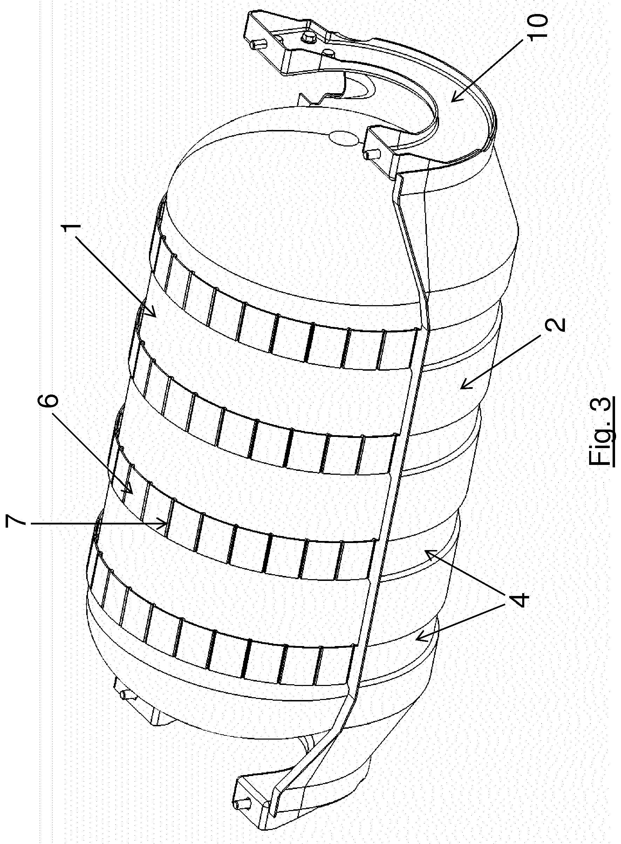

Fig. 3 stellt einen erfindungsgemäßen Drucktank 1 mit Tragelement 2 dreidimensional dar. Dabei ist die Karosserie des Fahrzeuges selbst nicht dargestellt, aber eine halbkreisförmig ausgeführte Anbindung zur Karosserie 10 an beiden axialen Enden des Tragelements 2, wodurch dieses an einer Karosserie befestigen kann.

Das Tragelement 2 weist axial verteilt mehrere radial umlaufende Sicken 4 auf. Die Sicken 4 sind axial an den selben Positionen angeordnet an welchen sich auch die Gummibänder der elastischen Lage 6 befinden.

Die Gummibänder sind zwischen Tragelement 2 und Drucktank 1 angeordnet und weisen entlang des Umfangs jeweils viele axial verlaufende Erhebungen 7 auf.

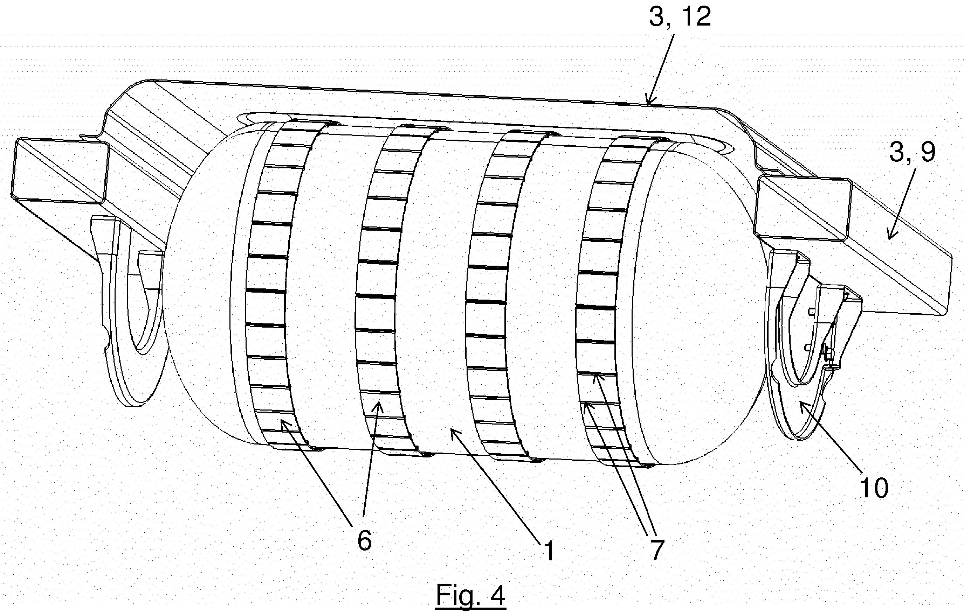

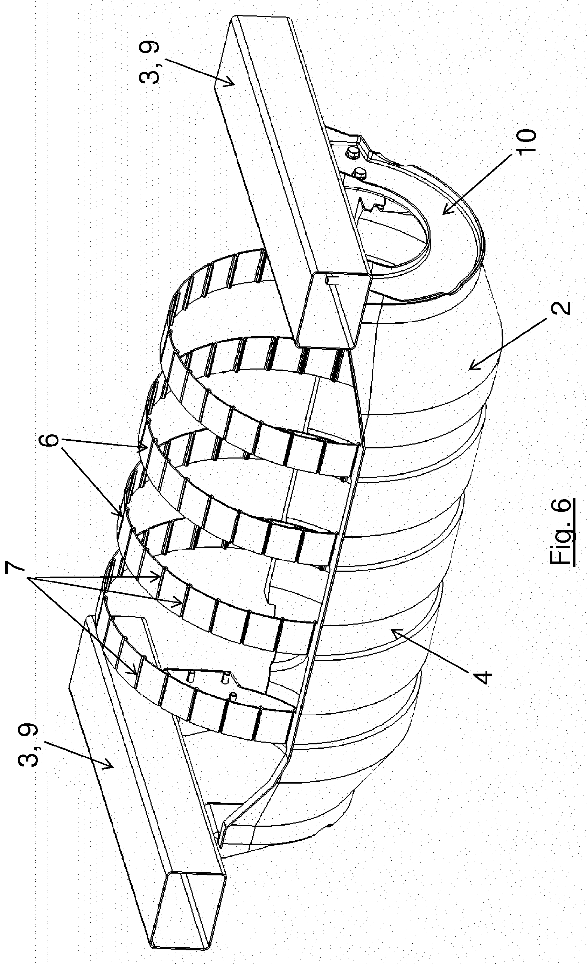

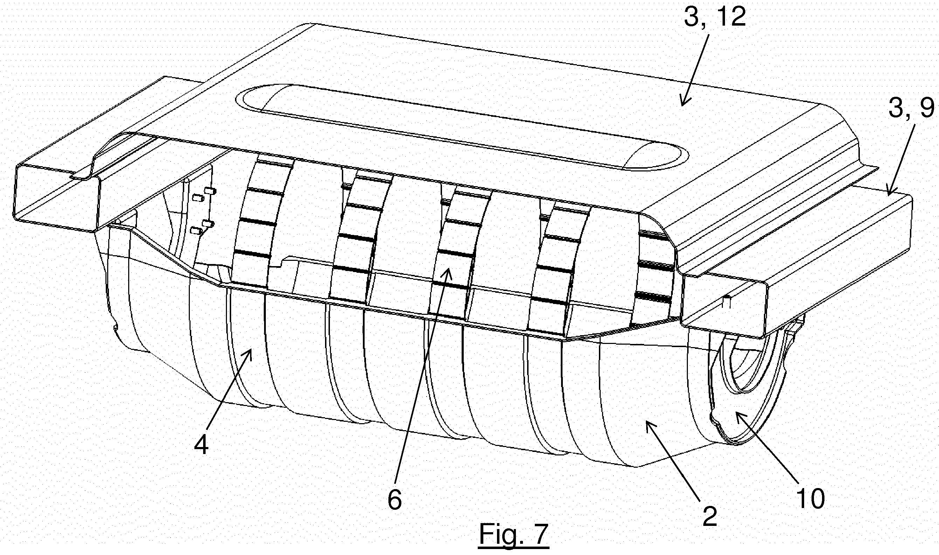

Wie in den Fig. 4 - Fig. 7 ersichtlich, ist über die beiden Anbindungen zur Karosserie 10 das Tragelement 2 an Längsträgern 9 der Karosserie 3 befestigt. Dabei ist in Fig. 4 das Tragelement 2 nicht dargestellt, in Fig. 6 und Fig. 7 der Drucktank 1 nicht dargestellt.

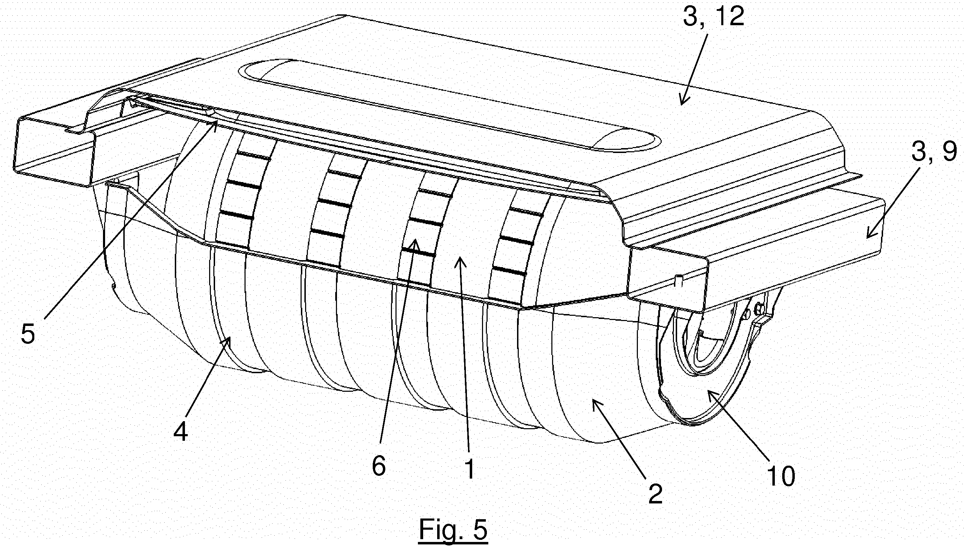

Fig. 5 stellt eine komplette erfindungsgemäße Anordnung dar, die in diesem Fall auch eine obere Halbschale 5 zur Aufnahme des Drucktanks 1 umfasst. Die obere Halbschale 5 ist weitgehend und der Heckboden 12 teilweise der Kontur des Drucktanks 1 angepasst. Die Gummibänder die die elastische Lage 6 bilden sind jeweils an den Innenseiten des Tragelements 2 und der oberen halbschale 5 und somit zwischen den Halbschalen und dem Drucktank 1 angeordnet.

In Fig. 6 ist der Drucktank 1 nicht dargestellt und dadurch die radial umlaufenden Gummibänder der elastischen Lage 6 mit ihren axial verlaufenden Erhebungen 7 besonders gut sichtbar.

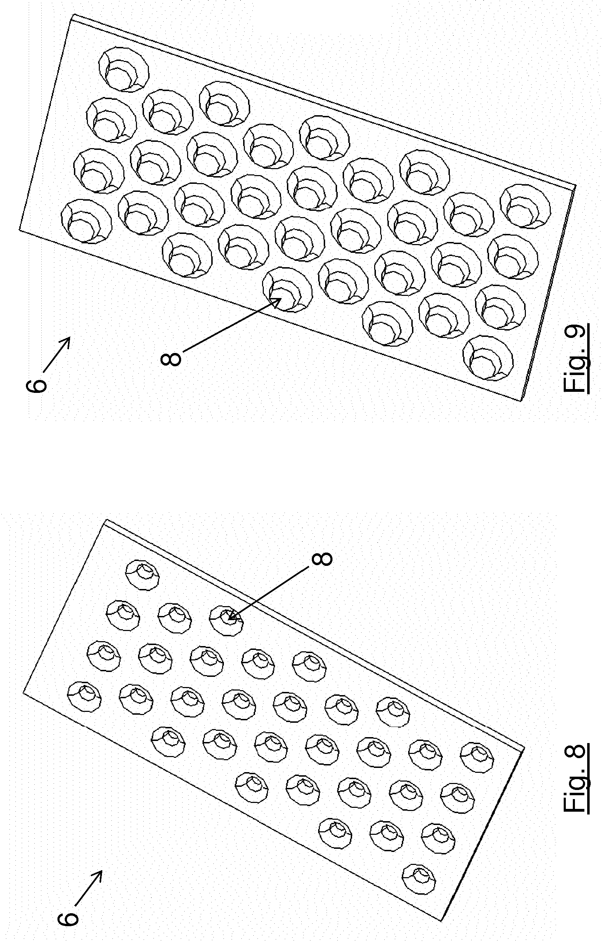

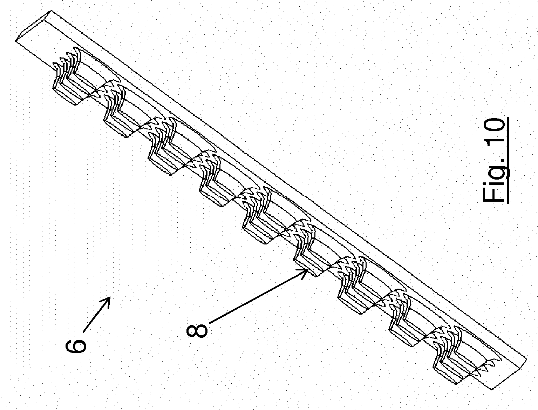

Fig. 8, 9 und 10 stellen einen Ausschnitt einer elastischen Lage 6 aus verschiedenen Blickwinkeln dar. Die elastische Lage 6, beispielsweise ein Gummiband, weist eine Vielzahl von regelmäßig verteilten Noppen 8 auf, die auf der dem Drucktank zugewandten Seite aus der elastischen Lage 6 herausragen. Die einzelnen Noppen 8 haben einen runden Querschnitt, andere Formen, wie zum Beispiel rechteckige und quadratische Querschnitte sind ebenfalls möglich.

### Bezugszeichenliste

- 1: Drucktank
- 2: Tragelement
- 3: Karosserie
- 4: Sicke
- 5: obere Halbschale
- 6: elastische Lage
- 7: axial verlaufende Erhebung
- 8: Noppe
- 9: Längsträger
- 10: Anbindung zur Karosserie
- 11: Bodenfreiheitslinie
- 12: Heckboden

## Patentansprüche

1. Kraftfahrzeug aufweisend einen Drucktank (1) und ein Tragelement (2), wobei das Tragelement (2) den Drucktank (1) trägt,
wobei das Tragelement (2) als untere Halbschale ausgebildet ist, so dass das Tragelement (2) die Unterseite des Drucktanks (1) zumindest teilweise umgibt, wobei das Tragelement (2) der Kontur des Drucktanks (1) im Wesentlichen folgt, wobei das Tragelement (2) an der Karosserie (3) des Kraftfahrzeugs befestigt ist, so dass durch das Tragelement (2) die Karosserie (3) versteift wird,
**dadurch gekennzeichnet, dass** zwischen dem Tragelement (2) und dem Drucktank (1) eine elastische Lage (6) angeordnet ist, wobei die elastische Lage (6) durch ein über den gesamten Umfang des Drucktanks (1) verlaufendes Band gebildet wird.

2. Kraftfahrzeug nach Anspruch 1,
**dadurch gekennzeichnet, dass** der Drucktank (1) zylindrisch ist.

3. Kraftfahrzeug nach Anspruch 1 oder 2,
**dadurch gekennzeichnet, dass** das Tragelement (2) der Kontur des Drucktanks (1) im Wesentlichen über die ganze Länge des Drucktanks (1) folgt.

4. Kraftfahrzeug nach zumindest einem der vorhergehenden Ansprüche,
**dadurch gekennzeichnet, dass** das Tragelement (2) als Blech ausgebildet ist.

5. Kraftfahrzeug nach zumindest einem der vorhergehenden Ansprüche,
**dadurch gekennzeichnet, dass** am Tragelement (2) Sicken (4) ausgebildet sind.

6. Kraftfahrzeug nach zumindest einem der vorhergehenden Ansprüche,
**dadurch gekennzeichnet, dass** das Tragelement (2) einen Abschnitt des Unterfahrschutzes des Kraftfahrzeugs bildet.

7. Kraftfahrzeug nach zumindest einem der vorhergehenden Ansprüche,
**dadurch gekennzeichnet, dass** es eine obere Halbschale (5) aufweist, so dass die obere Halbschale (5) die Oberseite des Drucktanks (1) zumindest teilweise umgibt, wobei die obere Halbschale (5) der Kontur des Drucktanks (1) folgt.

8. Kraftfahrzeug nach Anspruch 7,
**dadurch gekennzeichnet , dass** die obere Halbschale (5) an der Karosserie (3) des Kraftfahrzeugs befestigt ist.

9. Kraftfahrzeug nach Anspruch 1,
**dadurch gekennzeichnet, dass** die elastische Lage (6) axial verlaufende Erhebungen (7) aufweist oder Noppen (8).

10. Kraftfahrzeug nach Anspruch 1 oder 9,
**dadurch gekennzeichnet, dass** die elastische Lage (6) durch ein über den gesamten Umfang des Drucktanks (1) verlaufendes Gummiband gebildet wird.

11. Kraftfahrzeug nach zumindest einem der vorhergehenden Ansprüche,
**dadurch gekennzeichnet, dass** das Tragelement (2) an einem linken und/oder rechten Längsträger (9) befestigt, insbesondere verschraubt, ist.

12. Kraftfahrzeug nach zumindest einem der vorhergehenden Ansprüche,
**dadurch gekennzeichnet, dass** der Drucktank (1) quer zur Fahrtrichtung angeordnet ist, insbesondere im Heck des Kraftfahrzeuges.

## Claims

1. Motor vehicle having a pressurised tank (1) and a supporting element (2), the supporting element (2) supporting the pressurised tank (1), the supporting element (2) being configured as a lower half shell, with the result that the supporting element (2) at least partially surrounds the underside of the pressurised tank (1), the supporting element (2) substantially following the contour of the pressurised tank (1), the supporting element (2) being fastened to the body (3) of the motor vehicle, with the result that the body (3) is reinforced by way of the supporting element (2), **characterized in that** an elastic layer (6) is arranged between the supporting element (2) and the pressurised tank (1), the elastic layer (6) being formed by way of a strip which runs over the entire circumference of the pressurised tank (1).

2. Motor vehicle according to Claim 1, **characterized in that** the pressurised tank (1) is cylindrical.

3. Motor vehicle according to Claim 1 or 2, **characterized in that** the supporting element (2) follows the contour of the pressurised tank (1) substantially over the entire length of the pressurised tank (1).

4. Motor vehicle according to at least one of the preceding claims, **characterized in that** the supporting element (2) is configured as a metal sheet.

5. Motor vehicle according to at least one of the preceding claims, **characterized in that** beads (4) are configured on the supporting element (2).

6. Motor vehicle according to at least one of the preceding claims, **characterized in that** the supporting element (2) forms a section of the underride guard of the motor vehicle.

7. Motor vehicle according to at least one of the preceding claims, **characterized in that** it has an upper half shell (5), with the result that the upper half shell (5) at least partially surrounds the upper side of the pressurised tank (1), the upper half shell (5) following the contour of the pressurised tank (1).

8. Motor vehicle according to Claim 7, **characterized in that** the upper half shell (5) is fastened to the body (3) of the motor vehicle.

9. Motor vehicle according to Claim 1, **characterized in that** the elastic layer (6) has axially running elevations (7) or bumps (8).

10. Motor vehicle according to Claim 1 or 9, **characterized in that** the elastic layer (6) is formed by way of a rubber strip which runs over the entire circumference of the pressurised tank (1).

11. Motor vehicle according to at least one of the preceding claims, **characterized in that** the supporting element (2) is fastened, in particular screwed, to a left-hand and/or right-hand longitudinal carrier (9).

12. Motor vehicle according to at least one of the preceding claims, **characterized in that** the pressurised tank (1) is arranged transversely with respect to the driving direction, in particular in the rear of the motor vehicle.

## Revendications

1. Véhicule automobile doté d'un réservoir de pression (1) et élément de support (2), l'élément de support (2) portant le réservoir de pression (1), l'élément de support (2) étant réalisé sous forme de demi-coque inférieure, de sorte que l'élément de support (2) entoure en partie le côté intérieur du réservoir de pression (1), l'élément de support (2) suivant essentiellement le contour du réservoir de pression (1), l'élément de support (2) étant fixé à la carrosserie (3) du véhicule automobile, de telle sorte que la carrosserie (3) soit rigidifiée par l'élément de support (2),
**caractérisé en ce qu'**entre l'élément de support (2) et le réservoir de pression (1) est disposée une couche élastique (6), la couche élastique (6) étant formée par une bande s'étendant sur toute la périphérie du réservoir de pression (1).

2. Véhicule automobile selon la revendication 1,
**caractérisé en ce que** le réservoir de pression (1) est cylindrique.

3. Véhicule automobile selon la revendication 1 ou 2,
**caractérisé en ce que** l'élément de support (2) suit le contour du réservoir de pression (1) essentiellement sur toute la longueur du réservoir de pression (1).

4. Véhicule automobile selon au moins l'une quelconque des revendications précédentes,
**caractérisé en ce que** l'élément de support (2) est réalisé sous forme de tôle.

5. Véhicule automobile selon au moins l'une quelconque des revendications précédentes,
**caractérisé en ce que** des moulures (4) sont réalisées sur l'élément de support (2).

6. Véhicule automobile selon au moins l'une quelconque des revendications précédentes,
**caractérisé en ce que** l'élément de support (2) forme une portion de la protection antiencastrement du véhicule automobile.

7. Véhicule automobile selon au moins l'une quelconque des revendications précédentes,
**caractérisé en ce qu'**il présente une demi-coque supérieure (5), de telle sorte que la demi-coque supérieure (5) entoure au moins en partie le côté supérieur du réservoir de pression (1), la demi-coque supérieure (5) suivant le contour du réservoir de pression (1).

8. Véhicule automobile selon la revendication 7,
**caractérisé en ce que** la demi-coque supérieure (5) est fixée à la carrosserie (3) du véhicule automobile.

9. Véhicule automobile selon la revendication 1,
**caractérisé en ce que** la couche élastique (6) présente des rehaussements (7) ou des bossages (8) s'étendant axialement.

10. Véhicule automobile selon la revendication 1 ou 9,
**caractérisé en ce que** la couche élastique (6) est formée par une bande de caoutchouc s'étendant sur toute la périphérie du réservoir de pression (1).

11. Véhicule automobile selon au moins l'une quelconque des revendications précédentes,
**caractérisé en ce que** l'élément de support (2) est fixé à un support longitudinal gauche et/ou droit (9), en particulier par vissage.

12. Véhicule automobile selon au moins l'une quelconque des revendications précédentes,
**caractérisé en ce que** le réservoir de pression (1) est disposé transversalement à la direction de conduite, en particulier à l'arrière du véhicule automobile.
